## Europäisches Patentamt

## European Patent Office

## Office européen des brevets

(11) Veröffentlichungsnummer: **0 280 832**
**B1**

(12) # EUROPÄISCHE PATENTSCHRIFT

(45) Veröffentlichungstag der Patentschrift:
22.08.90

(21) Anmeldenummer: **87810127.8**

(22) Anmeldetag: **05.03.87**

(51) Int. Cl.$^5$: **E04B 2/96**

(54) Plattenkonstruktion für eine Fassade oder ein Dach.

(43) Veröffentlichungstag der Anmeldung:
**07.09.88 Patentblatt 88/36**

(45) Bekanntmachung des Hinweises auf die Patenterteilung:
**22.08.90 Patentblatt 90/34**

(84) Benannte Vertragsstaaten:
**AT BE CH DE FR GB IT LI NL SE**

(56) Entgegenhaltungen:
**EP-A- 130 438**
**EP-A- 195 662**
**EP-A- 250 989**
**CH-A- 649 802**
**DE-A- 3 541 730**
**GB-A- 2 167 110**
**GB-A- 2 179 391**

(73) Patentinhaber: **Metallbau Koller AG,**
**Güterbahnhofplatz 8, CH-4132 Muttenz(CH)**

(72) Erfinder: **Müller, Moritz, Im Spitzacker 44,**
**CH-4059 Basel(CH)**
Erfinder: **Kaufmann, Hans, St. Jakobs-Strasse 2,**
**CH-4132 Muttenz(CH)**
Erfinder: **Woerner, Hans, Rosenweg 22,**
**CH-4153 Reinach(CH)**

(74) Vertreter: **Eder, Carl E. et al, Patentanwaltsbüro EDER**
**AG Lindenhofstrasse 40, CH-4052 Basel(CH)**

## Beschreibung

Die Erfindung bezieht sich auf eine Plattenkonstruktion für eine Fassade oder ein Dach entsprechend den im Oberbegriff des Anspruches 1 angegebenen und durch die DE-A 3 541 730 bekannten Merkmalen.

Mit diesem Stand der Technik wird eine Verkleidung für Außenflächen von Gebäuden angestrebt, die den Eindruck einer einzigen Glasfläche machen und somit durch keinen Metallrahmen unterbrochen sein soll. Dabei wird ein zweischeibiges Isolierglas verwendet, dessen innenliegende Scheibe im Flächenformat kleiner als die außenliegende Scheibe ist. Dementsprechend ist der zur Anlage des Isolierglases bestimmte Abschnitt des Halterahmens gestuft ausgebildet, so daß sich zwei voneinander versetzte Anlageflächen zum Verkleben mit den Rändern beider Scheiben ergeben.

Die Einwirkung von Witterungseinflüssen sowie die unterschiedlichen Wärmedehnungen von Glas und Leichtmetall lassen jedoch befürchten, daß der zwischen dem Isolierglas und dem Halterahmen vorhandene Klebeverbund im Laufe der Zeit sich lockert oder gar löst und damit das Herabfallen des Isolierglases vom Gebäude ermöglicht.

Um dieser Gefahr entgegenzuwirken, wird mit der EP-A 0 130 438 gelehrt, die Isolierglasplatten an das Traggerüst des Gebäudes von außen her anzuschrauben, indem ein passender Schraubbeschlag in den Raum zwischen die beiden Glasscheiben in deren Randbereich eingreift. Damit wird aber nur die innenliegende Scheibe des Isolierglases fixiert, wohingegen die außenliegende Scheibe allein durch Verklebung gehalten ist. Eine solche Konstruktion setzt eine Montage der Plattenkonstruktion von außen und damit ein kostenaufwendiges Gerüst voraus, ganz abgesehen davon, daß das Isolierglas nicht mit einem Halterahmen verklebt ist.

In der älteren, nicht vorveröffentlichten EP-A 0 250 989 wird vorgeschlagen, einen Schraubbeschlag in eine kreisbogenförmige Ausfräsung im Rand der außenliegenden Scheibe eingreifen zu lassen und damit die Isolierglasplatte am Traggerüst des Gebäudes anzuschrauben, wobei zwischen der innenliegenden Scheibe und dem Traggerüst Schichten von Chemiewerkstoffen sich befinden. Auch diese Lösung setzt eine Montage der Plattenkonstruktion von außen und damit ein kostenaufwendiges Gerüst voraus. Außerdem ist das Isolierglas nicht mit einem Halterahmen verklebt.

Der Erfindung liegt demgegenüber die Aufgabe zugrunde, das Lösen der außenliegenden Scheibe bei Versagen der Klebeverbindung durch eine einfachere mechanische Halterung zu vermeiden, die eine Montage am Gebäude von außen entbehrlich macht und daher auch kein Montagegerüst benötigt.

Ausgehend von der DE-A 3 541 730 besteht die erfindungsgemäße Lösung dieser Aufgabe darin, daß der zur Anlage der Scheibe bestimmte Abschnitt des Halterahmens mit einer nutenförmigen Vertiefung oder einem entsprechend hintergreifbaren Schenkel versehen ist, in welche oder hinter welchen jeweils ein scheibenparallel sich erstreckender Schenkel von Sicherungshaltern eingreift, die mit einem daran angrenzenden Steg die miteinander verklebten Ränder des Abschnittes und der Scheibe umfassen und mit einem weiteren, scheibenparallelen Schenkel in längliche Vertiefungen des Randes der außenliegenden Scheibe eingreifen, wobei die Sicherungshalter gegen das Lösen aus ihrer Eingriffsstellung abgestützt sind.

Damit wird der Vorteil erzielt, daß die einzelne Plattenkonstruktion witterungsunabhängig in der Werkstatt komplett hergestellt werden kann, indem die Montage der Sicherungshalter im gleichen Arbeitsgang mit der Verklebung der Scheibe am Halterahmen erfolgt. Damit wird ein aufwendiges Montagegerüst am Gebäude entbehrlich, weil der Halterahmen mit der daran befindlichen Scheibe und deren mechanischen Sicherung lediglich an das vorhandene Traggerüst angehängt und mit diesem von der Gebäudeinnenseite her verbunden werden kann.

Es ist zwar durch die EP-A 0 195 662 bekannt, eine aus Stein bestehende Vorhängeplatte für Fassaden von Gebäuden am oberen und unteren Rand mit nutenförmigen Einfräsungen zu versehen, in welche hakenförmige Ränder von Beschlägen eingreifen, die miteinander mittels Schienen verschraubt werden. Diese Beschläge weisen gebäudeseitig vorspringende Stege zum Befestigen der Steinplatte am Traggerüst des Gebäudes auf. Zwischen den Beschlägen und der Steinplatte befinden sich Schichten von Chemiewerkstoffen für Isolierzwecke.

Solche die Last einer Steinplatte tragende Beschläge vermitteln jedoch keine Anregung zur Lösung der erfindungsgemäßen Aufgabe eine oder mehrere Glasplatten mit einem Halterahmen zu verkleben und diese Verklebung durch stellenweise angeordnete Sicherungshalter mechanisch zu fixieren, die keine Tragefunktion zu besitzen brauchen.

In den Unteransprüchen sind vorteilhafte Ausgestaltungen der Erfindung offenbart, die sich mit der besonderen Anordnung von Mehrscheiben-Isolierglas, mit der Lage der Sicherungshalter und mit deren Abstützung in ihrer Eingriffsstellung befassen.

Einzelheiten der Erfindung sind in der Zeichnung schematisch und beispielsweise erläutert. Es zeigen:

Fig. 1: eine Teilansicht einer von mehreren Plattenkonstruktionen gebildeten Fassade,

Fig. 2: einen Vertikalschnitt durch einen Teil der Fassade entlang der Linie II–II der Figur 1 in grösserem Masstab,

Fig. 3: einen Horizontalschnitt durch einen Teil der Fassade entlang der Linien III–III der Figur 1 im gleichen Masstab wie die Figur 2,

Fig. 4: einen Ausschnitt aus der Figur 1 mit einem Randbereich einer Glasplatte und einem Sicherungshalter in noch grösserem Masstab,

Fig. 5: einen Ausschnitt aus der Figur 3 mit einem Halter, im gleichen Masstab wie die Figur 4,

Fig. 6: einen Horizontalschnitt durch einen Teil einer Variante der Fassade,

Fig. 7: eine schematisierte Ansicht eines Teils einer anderen Variante der Fassade und

Fig. 8: einen Horizontalschnitt entlang der Linie VIII–VIII der Figur 7 in grösserem Masstab.

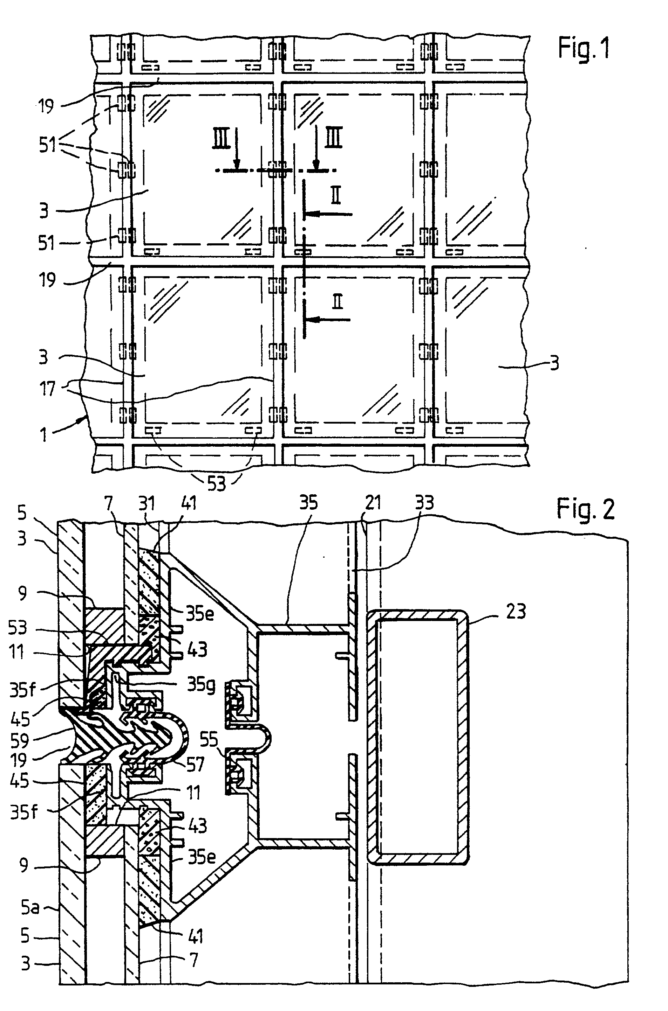

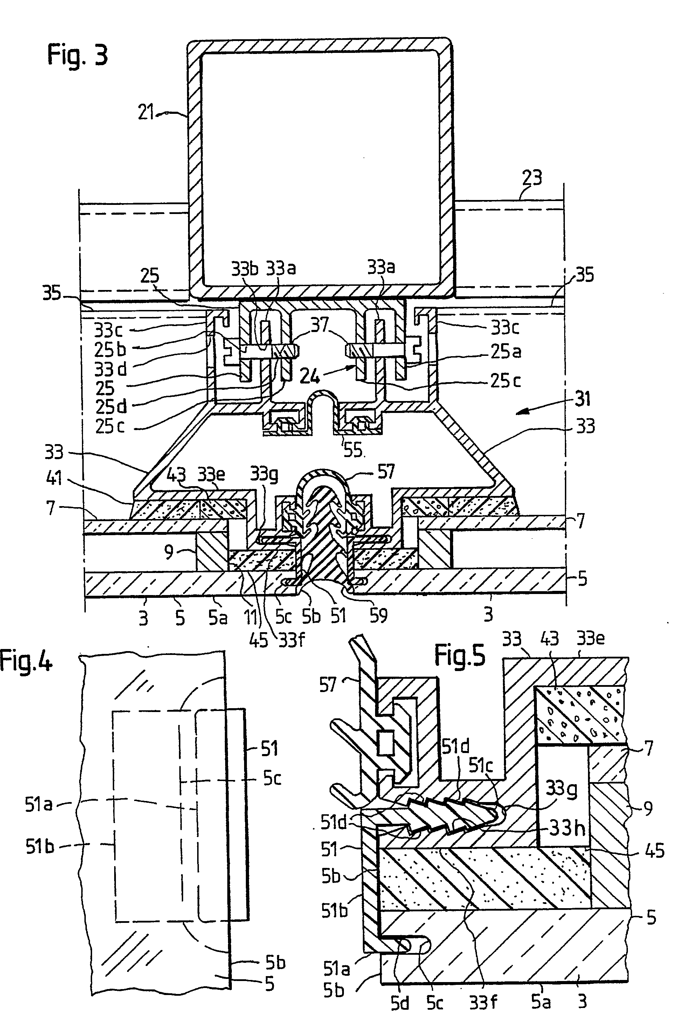

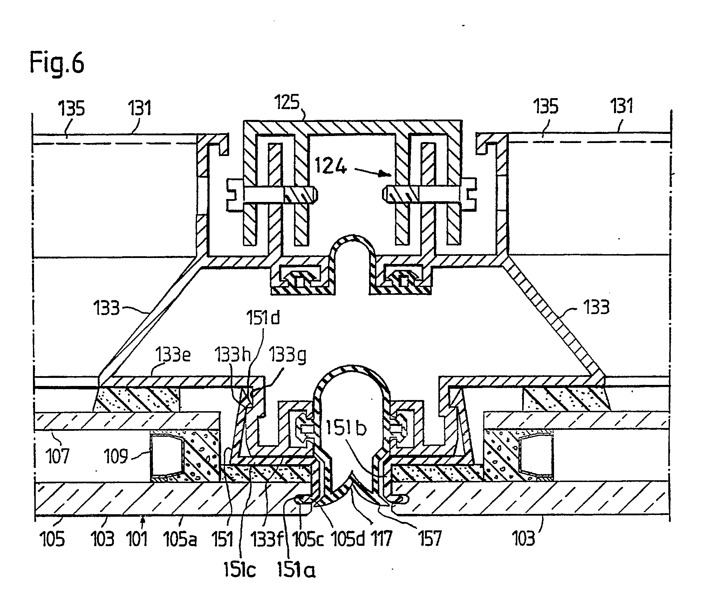

In der Figur 1 ist ein Teil einer Fassade 1 eines Gebäudes dargestellt, die als Plattenkonstruktion ausgebildet ist und Isolierglas-Platten 3 mit viereckigem Umriss und zwei Paar zueinander parallelen Rändern aufweist. Wie es in den Figuren 2, 3 und 5 ersichtlich ist, besitzt jede Isolierglas-Platte 3 eine äussere Scheibe 5 und eine innere Scheibe 7. Die beiden Scheiben 5, 7 bestehen aus klarem Glas und sind durch zwischen ihren Randbereichen angeordnete, entlang dem jeweiligen Rand verlaufende Randverbindungen 9, nämlich aus Metall und/oder Kunststoff bestehende Leisten, von einander in Abstand gehalten und starr sowie dicht miteinander verbunden. Die dem Innenraum des Gebäudes abgewandte, ebene, vertikale Begrenzungsfläche der äusseren Scheibe 5 bildet selbstverständlich auch die äussere Begrenzungsfläche der ganzen Isolierglas-Platte 3 und ist mit 5a bezeichnet. Die äussere Scheibe 5 jeder Isolierglas-Platte 3 ist ein wenig grösser als die innere Scheibe 7 und ragt über alle vier Ränder der letzteren hinaus, so dass sich auf der dem Innenraum des Gebäudes zugewandten Seite des Randes der Isolierglas-Platte 3 eine Kehle 11 ergibt. Die äussere Scheibe 5 jeder Isolierglas-Platte 3 ist dicker als die innere Scheibe 7 und besitzt bei ihren beiden von unten nach oben verlaufenden Rändern je eine zu ihr oder, genauer gesagt, zu den von ihren äusseren und inneren Begrenzungsflächen aufgespannten Ebenen rechtwinklige, vertikale Rand- oder Stirnflächen 5b. Jede dieser vertikalen Rand- oder Stirnflächen 5b ist mit mindestens einer länglichen Vertiefung 5c und vorzugsweise mit mindestens zwei in der Längsrichtung der betreffenden Stirnfläche 5b voneinander beabstandeten Vertiefungen 5c versehen. Bei den Isolierglas-Platten 3 ist zum Beispiel jede vertikale Stirnfläche mit drei Vertiefungen 5c versehen, wobei sich die Vertiefungen der einander zugewandten Rand- oder Stirnflächen 5b benachbarter Platten paarweise in der gleichen Höhe befinden. Eine der Vertiefungen 5c ist in grösserem Maßstab in den Figuren 4 und 5 ersichtlich und besteht aus einer in der Längsrichtung der betreffenden Stirnfläche 5b verlaufenden Nut, die bei ihren Enden durch gebogene, in die Stirnfläche 5b auslaufende Endflächen begrenzt ist. Jede Vertiefung ist im Querschnitt U-förmig und auf beiden Längsseiten eine zur äusseren Begrenzungsfläche 5a der Scheibe 5 parallele Begrenzungsflächen begrenzt. Von diesen dient die sich näher beim Gebäude-Innenraum befindende, zu den Begrenzungsflächen 5a parallele Begrenzungsfläche, wie noch näher erläutert wird, als Halte-Fläche 5d. Die Vertiefungen 5c können bei der Herstellung der Verbundglas-Platten in deren vertikale Rand- oder Stirnseiten eingeschliffen werden.

Zwischen sich neben- oder übereinander befindenden Isolierglas-Platten 3 sind vertikale Fugen 17 bzw. horizontale Fugen 19 vorhanden. Die Fassade hat ein zum Tragen der Platten 3 dienendes, sich vollständig auf der dem Gebäude-Innenraum zugewandten Seite der von den Begrenzungsflächen 5a der Platten aufgespannten, vertikalen, ebenen Grenz- oder Hüllfläche befindendes Traggerüst mit ortsfesten, starr miteinander verbundenen Tragstäben 21, 23, nämlich metallischen, im Querschnitt viereckigen Hohlprofilstäben. Die vertikalen Tragstäbe 21 befinden sich hinter den vertikalen Fugen 17, wobei sich jeder Tragstab 21 mindestens ungefähr über die Höhe der beiden, die betreffende Fuge 17 begrenzenden Platten 3 erstreckt und nämlich einen sich über die Höhe mehrerer übereinander angeordneter Platten 3 erstreckende Pfosten bildet. Die Tragstäbe 23 verlaufen horizontal, sind hinter den horizontalen Fugen 19 angeordnet und bilden sich zwischen einander benachbarten, vertikalen Tragstäben 21 erstreckende Sprossen. An den vertikalen Tragstäben 21 sind mit nicht dargestellten Befestigungsmitteln, etwa Schrauben, Profil-Tragstäbe 25 oder Stücke von solchen befestigt, die vier zu den Platten 3 hin vorstehende, zu der von der Fassade aufgespannten Ebene rechtwinklige, flanschartige Abschnitte besitzen, von denen die beiden äusseren Abschnitte 25a je mindestens zwei und vorzugsweise je mindestens drei vertikal übereinander angeordnete Löcher 25b, nämlich Bohrungen, und die beiden inneren Abschnitte 25c paarweise mit den Löchern 25b fluchtende Löcher 25d, nämlich Gewindebohrungen, aufweisen.

Für jede Isolierglas-Platte 3 ist ein ebenfalls vollständig auf der dem Gebäude-Innenraum zugewandten Seite der von den Begrenzungsflächen 5a aufgespannten Grenz- oder Hüllfläche angeordneter Halterahmen 31 mit zwei vertikalen und zwei horizontalen Schenkeln vorhanden, die je durch einen Haltestab 33 bzw. 35, nämlich einen metallischen Profilstab, gebildet sind. An der dem Gebäude zugewandten Seite weist der Halterahmen 31 eine Flanschanordnung 24 zur Befestigung der Plattenkonstruktion an einem am Gebäude befindlichen Traggerüst 21, 23 auf. Zu diesem Zweck besitzen die Haltestäbe 33 je einen flanschartigen Abschnitt 33a, der zwischen zwei benachbarte Abschnitte 25a und 25c eines Profil-Tragstabes 25 hineinragt und für jedes Paar von Löchern 25b, 25d ein mit diesen fluchtendes Loch 33b besitzt. Von den Löchern 33b des Haltestabes 33 besteht mindestens das sich in der Haltestab-Mitte oder am nächsten bei dieser befindende aus einer Bohrung. Die restlichen Löcher 33b des Haltestabs sind entweder ebenfalls durch Bohrungen oder durch in der Haltestab-Längsrichtung verlaufende Langlöcher, d.h. Schlitze, gebildet. Jeder Haltestab 33 weist auf der seinem Abschnitt 33a abgewandten Seite des sich neben diesem befindenden Abschnitts 25a des Profil-Tragstabs 25 noch einen flanschartigen Abschnitt 33c mit einem mit drei Löchern 25b, 25d, 33b fluchtenden, das Einführen einer Schraube 37 ermöglichenden Loch 33d auf. Jede Schraube 37 hat einen an einem der flanschartigen Abschnitt 25a anliegenden Kopf und einen ein Paar Löcher 25b, 33b durchdringenden Bolzen, der mindestens an seinem dem Kopf abgewandten Ende mit einem Gewinde versehen und in ein Loch 25d eingeschraubt ist. Jeder vertikale Haltestab 33 ist also durch rechtwinklig zu seiner Längsrichtung verlaufende Schrauben 37 rechtwinklig zu der von der Begrenzungsfläche 5a aufgespannten Vertikalebene unverschiebbar an einem der Tragstäbe 21, 23 gehalten. Die zum gleichen Halterahmen 31 gehörenden Haltestäbe 33, 35 sind zum Beispiel durch nicht dargestellte Eckverbindungsstücke starr miteinander verbunden, wobei die horizontalen Haltestäbe 35 an den sich hinter ihnen befindenden, horizontalen Tragstäben 23 nicht direkt befestigt, sondern nur über die vertikalen Haltestäbe 33 mit dem aus den Tragstäben 21, 23 gebildeten Traggerüst verbunden sind.

Die Haltestäbe 33, 35 haben auf ihren den Platten 3 zugewandten Seiten je einen im Querschnitt etwa Z-förmigen Teil. Dieser weist einen entlang einem Randabschnitt der dem Gebäude-Innenraum zugewandten Fläche der inneren Scheibe 7 verlaufenden und zur letztgenannten Fläche parallelen Abschnitt 33e bzw. 35e und einen Abschnitt 33f bzw. 35f auf, der entlang einem dem Gebäude-Innenraum zugewandten Flächenabschnitt des über die innere Scheibe 7 hinausragenden Randabschnitts der äusseren Scheibe 5 verläuft und zum letztgenannten Flächenabschnitt parallel ist. Die Haltestab-Abschnitte 33f, 35f besitzen in ihrer Längsrichtung verlaufende und im allgemeinen zu den Begrenzungsflächen 5a parallele Nuten 33g bzw. 35g, die im Querschnitt in die den Fugen 17 bzw. 19 zugewandten Ränder der Abschnitte 33f, 35f münden und deren Mündungsabschnitte durch geneigte Flächen begrenzt sind und sich zum Grund der betreffenden Nut hin verengen. Wie es in der Figur 5 dargestellt ist, besitzt jede Nut 33g zwischen ihrem genannten Mündungsabschnitt und ihrem Grund mindestens auf einer Seite und nämlich beidseitig eine Begrenzungsfläche mit aufeinanderfolgenden Rippen und Rillen, die eine etwa sägezahnförmige Profilierung ergeben und als Rastmittel 33h dienen. Die entsprechenden Begrenzungsflächen der Nut 35g der horizontalen Haltestäbe 33 können durch glatte Ebenen gebildet sein oder eventuell ebenfalls sägezahnförmige Profilierungen aufweisen.

Die weiter von den Fugen 17, 19 entfernten Teilbereiche der Haltestab-Abschnitte 33e bzw. 35e sind mittels aus gummielastischem Silikon-Klebstoff 41 gebildeten Streifen mit streifenförmigen Innenflächenabschnitten der inneren Scheiben 7 verklebt. Zwischen der sich näher bei den Fugen 17, 19 befindenden Teilbereichen der Haltestab-Abschnitte 33e bzw. 35e und den inneren Scheiben 7 sind leistenförmige, poröse Kunststoff-Füllmassen 43 angeordnet. Die Haltestab-Abschnitte 33f, 35f sind mittels aus gummielastischem Silikon-Klebstoff 45 bestehenden Streifen mit Innenflächenabschnitten der äusseren Scheiben 5 verklebt. Die Klebstoffe 41, 45 können beim Verbinden der Verbundglas-Platte 3 mit einem Halte-Rahmen 31 in bekannter Weise als Paste aufgetragen werden und gelangen danach beim Trocknen in einen gummielastischen Zustand.

Zum Befestigen der Isolierglas-Platten 3 ist ferner für jede Vertiefung 5c der äusseren Scheibe ein sich vollständig auf der dem Gebäude-Innenraum zugewandten Seite der von den Begrenzungsflächen 5a aufgespannten, ebenen, vertikalen Grenz- oder Hüllfläche befindender Sicherungshalter 51 vorhanden, der einen zu den Begrenzungsflächen 5a parallelen, in eine der Vertiefungen 5c eingreifenden Schenkel 51a, einen zu den Begrenzungsflächen 5a rechtwinkligen Steg 5b und einen zu den Begrenzungsflächen 5a parallelen, in die Nut 3a des sich hinter dem betreffenden seitlichen, vertikalen Rand der Isolierglas-Platte 3 befindenden Haltestabes 33 hineinragenden Schenkel 51c besitzt. Jeder Sicherungshalter 51 ist also U-förmig, wobei aber der Schenkel 51a kürzer als der Schenkel 51c ist. Die einander abgewandten, in der Längsrichtung des betreffenden Haltestabes 33 verlaufenden Seiten oder Flächen jedes Schenkels 51c sind mit in der letztgenannten Längsrichtung verlaufenden, im Querschnitt sägezahnförmigen Rippen und Rillen versehen, die Rastmittel 51d bilden und deren Rippen in die Rillen der Rastmittel 33h eingerastet sind. Die einstückigen Sicherungshalter 51 bestehen zum Beispiel aus einem elastisch deformierbaren, aber nicht gummielastischen und also formfesten Kunststoff, etwa Polyamid, wobei die als Rastmittel 33h und 51d dienenden Rippen und Rillen derart bemessen sind, dass sie eben unter einer vorübergehenden, elastischen Deformation von Bereichen des Schenkels 33f des metallischen Haltestabs 33 und/oder des Schenkels 51c des Sicherungshalters 51 ineinander eingerastet werden können und dann den Sicherungshalter 51 festhalten.

Beim unteren, horizontalen Rand jeder Isolierglas-Platte 3 sind mindestens in der Nähe von beiden Enden dieses Randes formfeste, Z-förmige, zum Beispiel aus Kunststoff bestehende Stützkörper 53 angeordnet, deren einer Schenkel auf einer horizontalen Fläche des sich beim betreffenden Plattenrand befindenden Haltestabes 35 aufliegt und mit rippenförmigen Nocken in Längsrillen des Haltestabs eingreift. Die Isolierglas-Platte 3 liegt einerseits mit einer Stirnfläche der inneren Scheibe 7 und der Randverbindung 9 auf dem genannten Schenkel des Stützkörpers 53 und mit einem Teil der Stirnfläche der äusseren Scheibe 5 auf dem anderen Schenkel des Stützkörpers auf. Der Steg des Stützkörpers 53 ist derart ausgebildet, dass auch zwischen einem Querschnittsteil des Stützkörper-Stegs und dem Haltestab 35 noch Klebstoff 45 vorhanden ist. Die Stützkörper 53 sind in der Längsrichtung der horizontalen Ränder der Platten 3 wesentlich kürzer als diese Ränder und derart in der Nähe der beiden Enden der Plattenränder angeordnet, dass die Plattenränder auf beiden Seiten jedes Stützkörpers durch Klebstoff mit den Haltestäben 35 verbunden sind.

Jede Isolierglas-Platte 3 wird also durch gummielastische Streifen der Klebstoffe 41, 45 dicht am zugehörigen Halterahmen 31 gehalten. Da jede Halte-Fläche 5d einen Abschnitt einer Scheibe 5 auf dessen dem Gebäude-Innenraum abgewandter Seite begrenzt sowie eine auf ihr stehende, mit der Begrenzungsfläche 5a der betreffenden Scheibe 5 einen rechten Winkel bildende sowie zum Aussenraum des Gebäudes hin ragende Flächennormale hat und da jeder Sicherungshalter 51 mit seinem Schenkel 51a mindestens einen Teil einer Halte-Fläche 5d übergreift und an dieser angreift, sichern die Sicherungshalter 51 die Isolierglas-Platten 3 auch dann gegen rechtwinklig zu den Plattenebenen von den Haltestäben 33, 35 weggerichtete Bewegungen, wenn sich die Klebverbindungen lösen sollten.

Die vertikalen Haltestäbe 33 von sich nebeneinander befindenden Halterahmen 31 und die horizontalen Haltestäbe 35 von sich übereinander befindenden Halterahmen 31 besitzen einander zugewandte, voneinander durch Zwischenräume getrennte Abschnitte mit Längsnuten. In diesen sind die genannten Zwischenräume überbrückende, aus einem gummielastischen Material bestehende Dichtungsleisten 55 bzw. 57 gehalten, die die benachbarten Halterahmen 31 gegeneinander abdichten. Die Dichtungsleisten 55, 57 sind im Bereich der Fugen 17, 19 U-förmig ausgebildet, wobei die U-Schenkel der sich weiter aussen befindenden Dichtungsleisten 57 zum U-Grund hin ragende Lippen besitzen. Die zwischen einander benachbarten Platten 3 vorhandenen Fugen 17, 19 sind mit gummielastischen Dichtungsleisten 59 dicht abgeschlossen, die mehrere geneigt zu den beiden benachbarten Isolierglas-Platten 3 hin ragende Lippen besitzen. Der innere Abschnitt jeder Dichtungsleiste 59 wird von den erwähnten Lippen der Dichtungsleisten 55 gehalten. Die Lippen des äussersten, d.h. am weitesten vom Gebäude-Innenraum entfernten Abschnitts der Dichtungsleiste 59 liegen an einander zugewandten Stirnseiten der äusseren Scheiben 5 benachbarter Isolierglas-Platten 3 and und haben freie Ränder, die mindestens annähernd bündig mit den Begrenzungsflächen 5a sind.

Möglicherweise können die äussersten Lippen die Dichtungsleisten 59 bei der einen oder anderen Fuge ein wenig über die Isolierglas-Platte 3 hinausragen. Abgesehen davon weist jedoch die Fassade 1 oder mindestens deren aussen mit Isolierglas-Platten 3 versehener Teil keine über die von den Begrenzungsflächen 5a aufgespannte, vertikale, ebene Grenz- oder Hüllfläche hinausragende Teile auf. Die Fassade besitzt also insbesondere keine festen und vorzugsweise überhaupt keine Teile, die sich ausserhalb der genannten Grenz- oder Hüllfläche befinden. Von der Aussenseite des Gebäudes her gesehen sind also von der Fassade 1 lediglich die äusseren Scheiben 5 der Isolierglas-Platten 3 und die zwischen den äusseren Scheiben 5 vorhandenen Fugen 17, 19 ersichtlich, die durch die äusseren, konkaven Begrenzungsflächen der Dichtungsleisten 59 abgeschlossen sind. Im übrigen können die Breiten der Fugen 17, 19 ohne weiteres verhältnismässig klein bemessen werden und etwa höchstens 20 mm oder noch weniger betragen.

Die flanschartigen Abschnitte 33a der vertikalen Haltestäbe 33 haben zwischen den flanschartigen Abschnitten 25a, 25c, zwischen die sie hineinragen in der Richtung der Achsen der Schrauben 37, d.h. parallel zu den Isolierglas-Platten 3 und rechtwinklig zu den vertikalen Trag- und Haltestäben 21, 33 Spiel. Falls daher die horizontal gemessenen Abstände der vertikalen Tragstäbe 21 und/oder die horizontalen Abmessungen der Halterahmen 31 nicht genau ihren vorgesehenen Sollwerten entsprechen sollten, können diese Ungenauigkeiten durch das besagte Spiel kompensiert werden. Ferner ermöglicht dieses Spiel, dass sich die vertikalen Haltestäbe 33 mitsamt den an ihnen befestigten Sicherungshaltern 51 bei durch Temperaturänderungen bewirkten Änderung der horizontalen Abmessungen der Halterahmen 31 und/oder der Abstände der vertikalen Tragstäbe 21 innerhalb gewisser Grenzen parallel zu den Schrauben 37 bewegen können. Falls einige der Löcher 33b jedes vertikalen Haltestabs 33 durch in der Längsrichtung der Haltestäbe 33 verlaufende Schlitze gebildet sind, können zudem auch durch Temperaturveränderungen bewirkte, von einander abweichende Längenänderungen der Profilstäbe 25 und Haltestäbe 33 dadurch kompensiert werden, dass sich die die Schlitze begrenzenden Haltestababschnitte ein wenig gegen die Schrauben 37 verschieben.

Die Fassade 101, von der in der Figur 6 ein Ausschnitt dargestellt ist, besitzt Isolierglas-Platten 103 mit äusseren Scheiben 105, inneren Scheiben 107 und Randverbindungen 109. Die Isolierglas-Platten 103 sind weitgehend ähnlich ausgebildet wie die Isolierglas-Platten 3 und unterscheiden sich von diesen abgesehen von allenfalls verschiedenen Abmessungen im wesentlichen nur dadurch, dass die Randverbindungen 109 etwas anders als die Randverbindungen 9 ausgebildet sind und je einen hohlen Metall-Profilstab aufweisen, der mit beiden Scheiben 105, 107 durch je eine Silikon-Klebstoffschicht verbunden und gegen die Umgebung der Isolierglas-Platte 103 durch einen Kleb- und/oder Füllstoff dicht abgedeckt ist. Die vertikalen Rand- oder Stirnflächen der äusseren Scheiben 105 der Isolierglas-Platten 103 sind mit den Vertiefungen 5c entsprechenden Vertiefungen 105c versehen, die auf ihrer sich näher beim Gebäude-Innenraum befindenden Seite durch Halte-Flächen 105d begrenzt sind. Zwischen jeweils zwei einander benachbarten, sich nebeneinander befindenden Isolierglas-Platten 103 ist eine vertikale Fuge 117 vorhanden, hinter der sich ein im Querschnitt gleich wie der Profilstab 25 ausgebildeter Profilstab 125 befindet, der an einem nicht dargestellten Pfosten befestigt ist. Für jede Isolierglas-Platte 103 ist ein Halterahmen 131 vorhanden, der aus zwei metallischen, vertikalen Haltestäben 133 und zwei metallischen, horizontalen Haltestäben 135 gebildet ist und der mittels der Flanschanordnung 124 am Gebäude befestigbar ist. Die vertikalen Haltestäbe 133 sind in analoger Weise mit Profilstäben 125 verbunden wie die Haltestäbe 33 mit Profilstäben 25. Jeder vertikale Haltestab 133 besitzt auf seiner der Isolierglas-Platte 103 zugewandten Seite einen im allgemeinen Z-förmigen Teil mit Abschnitten 133e, 133f, die analog wie die Abschnitte 33e, 33f der Haltestäbe 33 angeordnet sind und mit Randabschnitten der Innenflächen der Scheiben 107 bzw. 105 verklebt sind. Ein Haltestab 133 unterscheidet sich von einem Haltestab 33 jedoch dadurch, dass eine der Nut 33g entsprechende Nut 133g im Bereich des Abschnittes 133e sich befindet, der zur Anlage der inneren Scheibe 107 bestimmt ist. Der scheibenseitige Rand dieser Nut 133g bildet ein Rastmittel 133h zur Abstützung des Sicherungshalters 151.

Für jede Vertiefung 105c ist ein in diese eingreifender sowie mehrfach abgewinkelter Sicherungshalter 151 vorhanden, der einen zum Gebäude-Innenraum hin von der äusseren Scheibe 105 wegragenden Schenkel besitzt. Dieser hat an seinem freien Ende einen widerhakenförmigen Randabschnitt, der die von den Rastmitteln 133h gebildete Schulter hintergreift und seinerseits Rastmittel 151d bildet. Im übrigen unterscheidet sich die Fassade 101 von der Fassede 1 noch dadurch, dass bei den Fugen anstelle der zwei Dichtungsleisten 57, 59 nur eine einzige, hohle Dichtungsleiste 157 vorhanden ist. Abgesehen von den vorgängig beschriebenen Unterschieden ist die Fassade 101 weitgehend ähnlich ausgebildet wie die Fassade 1. Es sei insbesondere darauf hingewiesen, dass sich auch bei der mindestens einen Teil der Fassade 101 bildenden Plattenkonstruktion keine Teile ausserhalb der von den Bergenzungsflächen 105a aufgespannten, vertikalen, ebenen Grenz- oder Hüllfläche befinden.

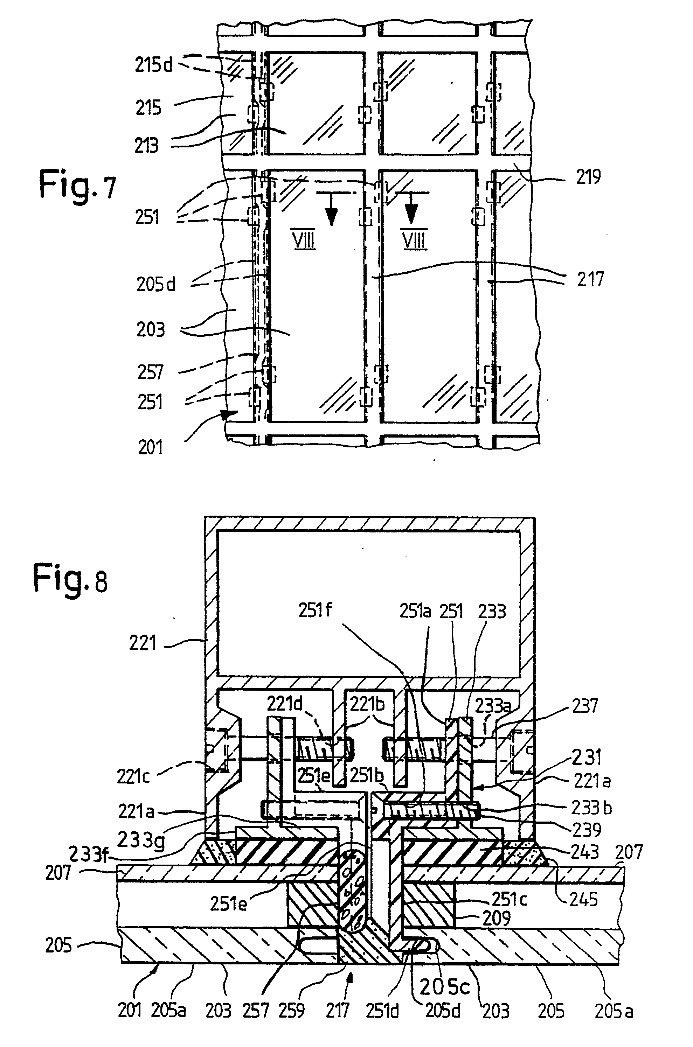

Die in den Figuren 7 und 8 dargestellte Fassade 201 besitzt Isolierglas-Platten 203 und 213, wobei die Platten 213 kleiner, nämlich weniger hoch als die sich unter ihnen befindenden Platten 203 sind. Jede Isolierglas-Platte 203 besitzt eine äussere Scheibe 205, eine innere Scheibe 207 und die beiden Scheiben miteinander verbindende Randverbindungen 209. Jede äussere Scheibe 205 hat auf ihrer dem Gebäude-Innenraum abgewandten Seite eine vertikale, ebene Begrenzungsfläche 205a und bei ihren vertikalen Rändern je eine besonders deutlich in der Figur 8 ersichtliche Halte-Fläche 205d, die sich über die ganze Länge des betreffenden, vertikalen Scheibenrandes erstreckt. Jede Halte-Fläche 205d ist durch die dem Gebäude-Innenraum zugewandte Begrenzung einer Vertiefung 205c, nämlich einer Nut gebildet. Die Isolierglas-Platten 213 sind abgesehen von ihrer unterschiedlichen Grösse ähnlich ausgebildet wie die Isolierglas-Platten 203 und besitzen äussere Scheiben 215, deren vertikale Ränder mit entsprechend den Halte-Flächen 215d versehen sind. Zwischen den sich nebeneinander befindenden Isolierglas-Platten sind vertikale Fugen 217 und zwischen den sich übereinander befindenden Isolierglas-Platten sind horizontale Fugen 219 vorhanden.

Ein sich auf der dem Gebäude-Innenraum zugewandten Seite der Isolierglas-Platten 203, 213 befindendes Traggerüst besitzt hinter den vertikalen Fugen 217 angeordnete, vertikale, ortsfeste Tragstäbe 221, von denen einer in der Figur 8 ersichtlich ist, der sich mindestens über die Höhe der beiden die betreffende Fuge 217 begrenzenden Platten und eventuell über die Höhe mehrerer sich übereinander befindender Platten erstreckt und durch einen metallischen Profilstab gebildet ist. Jeder der zueinander parallelen Tragstäbe 221 besitzt einen als Vierkantrohr ausgebildeten Profilabschnitt, dessen eine Wand den Platten 213, 215 zugewandt ist. Diese Profilstab-Wand ist bei ihren beiden Rändern mit je einem zu einer der Platten hin vorstehenden, flanschartigen Abschnitt 221a und dazwischen mit zwei etwas weniger weit vorstehenden Abschnitten 221b versehen. Jeder Abschnitt 221a hat für die Platte 203 bzw. jede Platte 203, 205, der er zugewandt ist, mindestens zwei Löcher 221c, nämlich abgestufte Bohrungen, wobei beispielsweise mindestens in der Nähe von jedem unteren und oberen Plattenende ein solches Loch vorhanden ist. Vorzugsweise ist auch zwischen diesen beiden Löchern 221c noch mindestens ein Loch 221c vorhanden, wobei die Anzahl Löcher 221c entsprechend der Plattenhöhe grösser oder kleiner sein kann. Die Abschnitte 221b weisen mit den Löchern 221c fluchtende, als Gewindebohrungen ausgebildete Löcher 221d auf. Die Achsen der Löcher 221c und 221d verlaufen parallel zur Fassade, d.h. zur von den Platten 203, 205 aufgespannten, vertikalen Ebene und rechtwinklig zur Längsrichtung des Tragstabes 221 sowie der Fuge 217, welcher der Tragstab entlangläuft.

Bei jedem vertikalen Seitenrand jeder Isolierglas-Platte 203, 213 ist ein vertikaler Haltestab 233 angeordnet, der sich zumindest annähernd über die ganze Höhe der betreffenden Platte erstreckt und aus einem metallischen, ein wenig asymmetrischen T-Profilstab besteht. Der das T-Bein bildende Abschnitt eines Haltestabs 233 ragt zwischen zwei Abschnitte 221a, 221b des Tragstabs 221 hinein und hat Löcher 233a sowie in der Nähe seiner Wurzel Gewindebohrungen 233b. Schrauben 237 haben einen in einem der Löcher 221c versenkten und am betreffenden Tragstababschnitt 221a gehaltenen Kopf sowie einen Bolzen mit einem ein Loch 233a durchdringenden Schaft und einen in eine von einem Loch 221d gebildete Gewindebohrung eingeschraubten Gewindeteil. Dasjenige Loch 233a jedes Haltestabes 233, das sich in der Haltestab-Mitte oder am nächsten bei dieser befindet, besteht aus einer Bohrung. Die restlichen Löcher 233a des Haltestabs 233 sind vorteilhafterweise durch in der Haltestab-Längsrichtung verlaufende Langlöcher oder Schlitze gebildet. Zwischen dem den T-Balken bildenden Abschnitt 233f jedes Haltestabs 233 und dem diesem zugewandten Randabschnit der inneren Scheibe einer Isolierglas-Platte ist ein gummielastischer Streifen 243 angeordnet und auf seinen einander abgewandten Seiten mit der inneren Scheibe bzw. dem Haltestab dicht verklebt, wobei der Streifen 243 zum Beispiel beidseitig selbstklebend ausgebildet sein kann.

An jedem Haltestab 233 ist mindestens ein einstückiger Sicherungshalter 251 lösbar befestigt, der beispielsweise aus einem formfesten Kunststoff besteht. Jeder Sicherungshalter 251 ist im horizontalen Querschnitt ungefähr Z-förmig und hat zwei durch zwei Schenkel oder Stege 251b, 251c miteinander verbundene Schenkel 251a, 251d. Der Schenkel 251a verläuft rechtwinklig zur von der zugehörigen Platte 203 aufgespannten Ebene und liegt an der sich näher bei der Fuge 217 befindenden Fläche des T-Beins des ihn haltenden Haltestabs 23 an. Der Steg 251b ist parallel zur Plattenebene und hintergreift den Schenkel 233g des T-Balkens des Haltestabs 233, und zwar auf dessen der Platte 203 abgewandten und dem Tragstab 221 zugewandten Seite. Der Steg 251c hat einen zur Plattenebene rechtwinkligen, vom Tragstab 221 wegragenden Hauptabschnitt, der an der zur Plattenebene rechtwinkligen Rand- oder Stirnfläche der zugehörigen Platte 203 anliegt. An seinem dem Tragstab 221 sowie dem Gebäude-Innenraum abgewandten Rand hat der Sicherungshalter 251 einen Schenkel 251d, der an der Halte-Fläche 205d anliegt. Der Schenkel 251d erstreckt sich dabei höchstens bis zur Begrenzungsfläche 205a der betreffenden Platte 203 und ist vorzugsweise von dieser durch einen Zwischenraum getrennt. Der Steg 251b und der Steg 251c sind mit einer Anzahl Rippen 251e versteift. Ferner ist in der Mitte des Stegs 251b eine zusätzliche Verdickung vorhanden, die mit einem parallel zur Plattenebene und rechtwinklig zur Fuge 207 verlaufenden Loch 251f versehen ist. In diesem ist eine Schraube 239 mit einem Senkkopf angeordnet, deren Gewindeteil in eine der Gewindebohrungen 233b eingeschraubt ist und die den Sicherungshalter 251 lösbar und starr mit dem Haltestab 233 verbindet. Die parallele zu den Fugen 207, d.h. in vertikaler Richtung gemessene Abmessung der Sicherungshalter 251 ist wesentlich kleiner als die in der gleichen Richtung gemessene Abmessung der Platten 203, 213. Bei den relativ hohen Platten 203 sind beispielsweise an jedem Haltestab 233 zwei Sicherungshalter 251 befestigt, während bei den weniger hohen Platten 213 für jeden vertikalen Plattenrand nur ein Sicherungshalter 251 vorgesehen ist. Im übrigen sind die sich bei der gleichen Fuge 217 befindenden, zu benachbarten Platten gehörenden Sicherungshalter 251 in der Vertikalrichtung gegeneinander versetzt.

Die zwischen den freien Rändern der Tragstab-Abschnitte 221a und den Platten 203, 213 vorhandenen Zwischenräume sind mit gummielastischem Silikon-Klebstoff 245 ausgefüllt. In die Fugen 217 ist noch ein längliches, deformierbares, etwa aus Schaumstoff bestehendes Füllelement 257 eingelegt, das in der Figur 7 nur in einer Fuge gekennzeichnet ist. Das Füllelement 257 hat beispielsweise in entspanntem Zustand einen kreisförmigen Querschnitt, kann jedoch zum Beispiel in den neben den Sicherungshaltern 251 vorhandenen Verengungen der Fugen 217 zu einer abgeflachten Querschnittsform zusammengedrückt sein. Der äusserste Abschnitt der Fugen 217 ist mit Silikon-Klebstoff 259 derart ausgefüllt, dass die äussere Begrenzung des Klebstoffs mindestens ungefähr bündig mit den äusseren Begrenzungsflächen der Platten 203, 213 ist. Die Klebstoffe 245, 259 dienen gleichzeitig zum dichten Abschliessen der von ihnen ausgefüllten Zwischenräume. An den Innenflächen der inneren Scheiben der Platten 203, 205 sind entlang vor deren horizontalen Rändern verlaufende Haltestäbe befestigt. Diese zusammen mit den Haltestäben 233 einen Halterahmen 231 bildenden, nicht dargestellten Haltestäbe können beispielsweise das gleiche Profil wie die vertikalen Haltestäbe 233 oder ein Z-förmiges Profil aufweisen und mit den Streifen 243 entsprechenden, beidseitig verklebten Streifen festgeklebt sein. Falls sich die vertikalen Tragstäbe 221 durchgehend über die Höhe mehrerer übereinander befindender Platten erstrecken, können sie bei den horizontalen Rändern der Platten mit Durchbrüchen für die allenfalls vorhandenen, horizontalen Haltestäbe versehen sein, so dass diese zusammen mit den an der gleichen Platte befestigten, vertikalen Haltestäben 233 einen geschlossenen Rahmen 231 bilden können. Die horizontalen Haltestäbe können jedoch auch nur so lang bemessen werden, dass sie zwischen zwei einander benachbarten, vertikalen Tragstäben 221 Platz finden.

Die Plattenkonstruktionen können noch auf andere Weise geändert werden. Beispielsweise könnte man gewisse Merkmale und/oder Elemente der verschiedenen zeichnerisch dargestellten Varianten miteinander kombinieren. Zum Beispiel könnte man die sich nur über kurze Abschnitt der vertikalen Rand- oder Stirnflächen der äusseren Scheiben 5, 105 erstreckenden Vertiefungen 5c bzw. 105c und durch von diesen gebildeten Halte-Flächen 5d, 105d durch Vertiefungen und Halte-Flächen ersetzen, die sich analog wie die Halte-Flächen 205d unterbruchslos über die ganze Länge der betreffenden Scheiben-, Rand- oder Stirnflächen erstrecken. Ferner könnten die Sicherungshalter statt aus Kunststoff aus Metall bestehen. Des weitern könnte man eventuell bei jedem vertikalen Rand der Platten nur einen einzigen Sicherungshalter anordnen und diesen dafür stabförmig ausbilden, so dass er sich über einen relativ grossen Teil des Plattenrandes oder eventuell sogar über die ganze Länge von diesem erstreckt. Zudem könnte man zusätzlich zu den bei den vertikalen Plattenrändern angeordneten Sicherungshaltern oder eventuell anstelle von diesen bei den horizontalen Plattenrändern Sicherungshalter vorsehen. Ferner könnte jede Platte statt zwei aus Glas bestehenden Scheiben nur eine oder drei solche Scheiben aufweisen oder auch ganz oder teilweise undurchsichtig sein. Falls die Plattenkonstruktion Isolierglas-Platten je mit mehr als zwei Scheiben aufweist, sollen die Sicherungshalter an Halte-Flächen der jeweils äussersten Scheibe angreifen.

Eine durch die Plattenkonstruktion gebildete Fassade könnte statt einer vertikalen Ebene auch eine im Grundriss oder eventuell im Vertikalschnitt gekrümmte Fläche bilden. Bei einer solchen Plattenkonstruktion sollen die Sicherungshalter und vorzugsweise auch alle anderen Teile der Plattenkonstruktion oder, genauer gesagt, mindestens alle sich bei rechtwinkliger Blickrichtung auf die Platten im Bereich der Platten und Fugen befindenden Teile der Plattenkonstruktion auf der dem Gebäude-Innenraum zugewandten Seie der von den äusseren Begrenzungsflächen der Platten aufgespannten Grenz- oder Hüllfläche liegen, die in diesem Fall durch eine glatte, gebogene Fläche gebildet wäre.

Des weiteren könnte man die Plattenkonstruktionen nicht nur zur Bildung von Fassaden sondern auch von Dächern verwenden, wobei die Plattenkonstruktionen in diesem Fall geneigte oder eventuell horizontale Grenz- und Hüllflächen aufspannen könnten.

**Patentansprüche**

1. Plattenkonstruktion für eine Fassade oder ein Dach eines Gebäudes, bestehend aus jeweils einem durch Haltestäbe (33, 35; 133, 135; 233, 235) gebildeten Halterahmen (31,131,231), der an seiner dem Gebäude zugewandten Seite mit einer Flansch-Anordnung (24, 124) für die Befestigung des Halterahmens (31, 131, 231) an einem am Gebäude befindlichen Traggerüst (21, 23) versehen ist und der an seiner dem Gebäude abgewandten Seite mindestens einen umlaufend angeordneten Abschnitt (33f ,35f, 133f, 233f) zur Anlage und Festklebung des Randbereiches mindestens einer Scheibe (5, 105, 205) aufweist, wobei die Scheibe (5) den Halterahmen (31, 131, 231) überdeckt sowie zusammen mit den benachbarten Scheiben eine glatte Fassaden-Außenfläche bildet und zwischen den Rändern benachbarter Scheiben jeweils eine schmale, mit Dichtungsleisten (59, 157, 257) ausfüllbare Fuge (17, 117, 217) sich befindet, dadurch gekennzeichnet, daß der zur Anlage der Scheibe (5, 105, 205) bestimmte Abschnitt (33f, 133f, 233f) mindestens zwei sich gegenüberstehenden Haltestäben (33, 133, 233) des Halterahmens (31, 131, 231) mit einer nutenförmigen Vertiefung (33g, 133g) oder einem hintergreifbaren Schenkel (233g) versehen ist, in welche oder hinter welchen jeweils ein scheibenparallel sich erstreckender Schenkel (51c, 151d, 251b) von Sicherungshaltern (51, 151, 251) eingreift, die mit einem an den Schenkeln (51c, 151d, 251b) angrenzenden Steg (51b, 151b, 251c) die miteinander verklebten Ränder des Abschnittes (33f, 133f) und der Scheibe (5, 105, 205) umfassen und mit einem weiteren, scheibenparallelen Schenkel (51a, 151a, 251d) in längliche Vertiefungen (5c, 105c, 205c) des Randes der außenliegenden Scheibe (5, 105, 205) eingreifen, wobei die Sicherungshalter (51, 151, 251) gegen das Lösen aus ihrer Eingriffsstellung abgestützt sind.

2. Plattenkonstruktion nach Anspruch 1, dadurch gekennzeichnet, daß bei Anordnung eines Mehrscheiben-Isolierglases (3) die jeweils außenliegende Scheibe (5, 105, 205) mit den Sicherungshaltern (51, 151, 251) verbunden ist.

3. Plattenkonstruktion nach Anspruch 1 oder 2, dadurch gekennzeichnet, daß die Sicherungshalter (51, 151, 251) nur im Bereich von aufrechten Haltestäben (33, 133, 233) des Halterahmens (31, 131, 231) angeordnet sind.

4. Plattenkonstruktion nach Anspruch 1 oder einem der folgenden, dadurch gekennzeichnet, daß der Sicherungshalter (151) einen federnden Schenkel mit einem daran befindlichen Rastmittel (151d) aufweist, das in eine scheibenparallele Nut (133g) des Halterahmens (131) eingreift.

5. Plattenkonstruktion nach Anspruch 1 oder einem der folgenden, dadurch gekennzeichnet, daß die Sicherungshalter (51, 151, 251) durch die in die Fugen (17, 117, 217) einsetzbaren Dichtungsleisten (59, 157, 257) abgestützt sind.

6. Plattenkonstruktion nach Anspruch 1 oder einem der folgenden, dadurch gekennzeichnet, daß die Sicherungshalter (51, 151, 251) durch sich hintergreifende Rastmittel (51d, 151d, 33h, 133h) abgestützt sind, die sich an ihren Schenkeln (51c, 151c) und den Wandungen der nutenförmigen Vertiefungen (33g, 133g) befinden.

7. Plattenkonstruktion nach Anspruch 1 oder einem der folgenden, dadurch gekennzeichnet, daß die Sicherungshalter (251) mit dem Halterahmen (231) verschraubt sind.

**Claims**

1. Plate construction for a facade or a roof of a building and consisting each time of a retaining frame (31, 131, 231), which is formed by retaining rods (33, 35; 133, 135; 233, 235) and provided at its side facing the building with a flange arrangement (24, 124) for the fastening of the retaining frame (31, 131, 231) at a supporting framework (21, 23) situated at the building and displays at its side remote from the building at least one encirclingly arranged portion (33f, 35f, 133f, 233f) for bearing and gluing fast the rim region of at least one pane (5, 105, 205), wherein the pane (5) covers the retaining frame (31, 131, 231) as well as together with the neighbouring panes forms a smooth outward facade surface and a narrow gap (17, 117, 217), which is fillable by sealing strips (59, 157, 257), is situated each time between the rims of neighbouring panes, characterised thereby, that that portion (33f, 133f, 233f) of at least two mutually opposite retaining rods (33, 133, 233) of the retaining frame (31, 131, 231), which is intended for bearing the pane (5, 105, 205), is provided with a groove-shaped depression (33g, 133g) or an engageable limb (233g), into or behind which engages a respective limb (51c, 151d, 251b), which extends parallelly to the pane, of securing holders (51, 151, 251), which by a web (51b, 151b, 251c) adjoining the limb (51c, 151d, 251b) encompasses the glued-together rims of the portion (33f, 133f) and the pane (5, 105, 205) and by a further limb (51a, 151a, 251d), which is parallel to the pane, engage into elongate depressions (5c, 105c, 205c) of the rim of the outward pane (5, 105, 205), wherein the securing holders (51, 151, 251) are supported against the loosening out of their setting of engagement.

2. Plate construction according to claim 1, characterised thereby, that in the case of an arrangement of a multi-pane insulating glass (3), the respective outward pane (5, 105, 205) is connected with the securing holders (51, 151, 251).

3. Plate construction according to claim 1 or 2, characterised thereby, that the securing holders (51, 151, 251) are arranged only in the region of upright retaining rods (33, 133, 233) of the retaining frame (31, 131, 231).

4. Plate construction according to claim 1 or one of the following, characterised thereby, that the securing holder (151) displays a resilient limb with detent means (151d), which are disposed thereat and engage into a groove (133g), which is parallel to the pane, of the retaining frame (131).

5. Plate construction according to claim 1 or one of the following, characterised thereby, that the securing holders (51, 151, 251) are supported by the sealing strips (59, 157, 257), which are insertable into the gaps (17, 117, 217).

6. Plate construction according to claim 1 or one of the following, characterised therby, that the securing holders (51, 151, 251) are supported by engaging detent means (51d, 151d, 33h, 133h), which are disposed at their limbs (51c, 151c) and the walls of the groove-shaped depressions (33g, 133g).

7. Plate construction according to claim 1 or one of the following, characterised thereby, that the securing holders (251) are screwed together with the retaining frame (231).

**Revendications**

1. Structure en plaques pour une façade ou un toit d'un bâtiment, comprenant chaque fois un châssis porteur (31, 131, 231) qui est formé de barres de support (33, 35; 133, 135; 233, 235) et qui, sur sa face tournée vers le bâtiment, est muni d'un moyen à bride (24, 124) pour la fixation du châssis porteur (31, 131, 231) à une armature (21, 23) située sur le bâtiment et, sur sa face opposée au bâtiment, comporte au moins une partie périphérique (33f, 35f, 133f, 233f) pour l'appui et la fixation par collage de la partie périphérique d'au moins une vitre (5, 105, 205), structure dans laquelle la vitre (5) recouvre le châssis porteur (31, 131, 231) et forme avec les vitres voisines une surface extérieure de façade lisse et dans laquelle, entre les bords de vitres voisines, se trouve chaque fois un interstice étroit (17, 117, 217) agencé de manière à pouvoir être comblé par des baguettes d'étanchéité (59, 157, 257), caractérisée en ce que la partie (33f, 133f, 233f), destinée à l'appui de la vitre (5, 105, 205), d'au moins deux barres de support opposées (33, 133, 233) du châssis porteur (31, 131, 231), est munie d'une cavité (33g, 133g) en forme de rainure ou d'une aile (233g) agencée de manière à pouvoir servir de prise par derrière, cavité dans laquelle, ou aile derrière laquelle, une aile (51c, 151d, 251b), d'attaches (51, 151, 251), parallèle à la vitre, vient chaque fois en prise, lesquelles attaches enserrent les bords collés entre eux de la partie (33f, 133f) et de la vitre (5, 105, 205) par une âme (51b, 151b, 251c) attenante à l'aile (51c, 151d, 251b) et viennent en prise dans des cavités oblongues (5c, 105c, 205c) pratiquées dans le bord de la vitre extérieure (5, 105, 205) par une autre aile (51a, 151a, 251d) parallèle à la vitre, les attaches (51, 151, 251) étant maintenues en place dans leur position de prise.

2. Structure en plaques selon la revendication 1, caractérisée en ce que, dans le cas d'un vitrage isolant (3) à plusieurs vitres, chaque vitre extérieure (5, 105, 205) est fixée par les attaches (5, 151, 251).

3. Structure en plaques selon la revendication 1 ou 2, caractérisée en ce que les attaches (51, 151, 251) ne sont disposées qu'au voisinage de barres de support verticales (33, 133; 233) du châssis porteur (31, 131, 231).

4. Structure en plaques selon la revendication 1 ou l'une des suivantes, caractérisée en ce que l'attache (151) comporte une aile élastique avec un moyen d'encliquetage (151d) situé sur celle-ci et venant en prise dans une rainure (133g) du châssis porteur (131) qui est parallèle à la vitre.

5. Structure en plaques selon la revendications 1 ou l'une des suivantes, caractérisée en ce que les attaches (51, 151, 251) sont maintenues en glace par les baguettes d'étanchéité (59, 157, 257) insérables dans les interstices (17, 117, 217).

6. Structure en plaques selon la revendication 1 ou l'une des suivantes, caractérisée en ce que les attaches (51, 151, 251) sont maintenues en place par des moyens d'encliquetage (51d, 151d, 33h, 133h) qui viennent en prise mutuellement par derrière et qui se trouvent sur les ailes (51c, 151c) desdites attaches et dans les parois des cavités (33g, 133g) en forme de rainure.

7. Structure en plaques selon la revendication 1 ou l'une des suivantes, caractérisée en ce que les attaches (251) sont vissées au châssis porteur (231).

Fig.1

Fig. 2

**Fig. 3**

21

23

25  33b 33a    33a

35    35

35

33c    33c
25b    25a
33d
25    24    25c
25d
25c

37

31

33

55

33
41    43  33e  33g    57    33
7    7

9    5

3  5  5a  11  5c 5b 51 59    3

45 33f

**Fig.4**

51

5c

51a

51b

5b
5

**Fig.5**    33  43  33e

57    7

51d
51c

33g

51d    9
51    33h
5b    45
51b    5

51a
5b

5d 5c 33f 5a 3

Fig.6

**Fig. 7**

215d
215
213

251
205d
203
257
251
201

219
217

VIII    VIII

**Fig. 8**

221

251f    251a    251    233

221d    221b    233a    237

221c
221a
233g
233f
207
205

251e    251b
251e
201    205a    203    257    259    217    251d    205d    203    205    205a

231
221a
233b
239
243    207
251c    245
209
205c